# EUROPÄISCHE PATENTSCHRIFT

(11) **EP 1 761 690 B1**
(45) Veröffentlichungstag und Bekanntmachung des Hinweises auf die Patenterteilung: **20.02.2008**
(21) Anmeldenummer: 05731643.2
(22) Anmeldetag: 01.04.2005
(51) Int. Cl.: F01N 3/20, B01D 53/94, B01D 53/90

(54) **DOSIERVENTILANORDNUNG SOWIE VERFAHREN ZUM BETREIBEN EINER DOSIERVENTILANORDNUNG**
DOSING VALVE SYSTEM AND METHOD FOR THE OPERATION THEREOF
SYSTEME A SOUPAPE DE DOSAGE ET PROCEDE POUR FAIRE FONCTIONNER UN TEL SYSTEME

(30) Priorität: 24.06.2004 DE 102004030441
(43) Veröffentlichungstag der Anmeldung: 14.03.2007
(73) Patentinhaber: ROBERT BOSCH GMBH, 70442 Stuttgart (DE)
(72) Erfinder: HAGER, Bernhard, A-5412 Puch (AT); OFFENHUBER, Michael, A-5421 Adnet (AT); LACKNER, Franz, A-5542 Flachau (AT); SILLER, Johann, A-5412 Puch bei Hallein (AT); BERNEGGER, Leopold, A-5421 Adnet (AT)
(86) Internationale Anmeldenummer: PCT/EP2005/051476
(87) Internationale Veröffentlichungsnummer: WO 2006/000477

(56) Entgegenhaltungen:
- WO-A-96/08639
- DE-A1- 4 432 577
- DE-A1- 10 254 981
- DE-C1- 10 150 518

## Beschreibung

### Stand der Technik

Die Erfindung geht aus von einer Dosierventilanordnung sowie einem Verfahren zum Betreiben einer Dosierventilanordnung nach den Oberbegriffen der unabhängigen Ansprüche.

Zur Verminderung der in einem Abgas eines Verbrennungsmotors enthaltenen Stickoxide hat sich für solche Verbrennungsmotoren, die mit Luftüberschuss betrieben werden, ein Verfahren zur selektiven katalytischen Reduktion als vorteilhaft erweisen. Bei diesem Verfahren werden die Stickoxide zusammen mit Ammoniak in einem selektiven Katalysator zu Stickstoff und Wasser umgesetzt. Das zur katalytischen Umsetzung der Stickoxide notwendige Reduktionsmittel wird anstelle des Ammoniaks in Form einer wässrigen Harnstofflösung im Fahrzeug mitgeführt, aus der das Ammoniak durch Hydrolyse der Harnstofflösung in der jeweils zur Umsetzung benötigten Menge freigesetzt werden kann. Problematisch ist jedoch, dass in Abhängigkeit von der Harnstoffkonzentration die Gefahr des Einfrierens der wässrigen Harnstofflösung bei bestimmten Temperaturen besteht.

Aus der WO 02/42616 A1 ist ein Dosierventil für eine wässrige Harnstofflösung bekannt, in dessen Arbeitsraum zumindest teilweise unter Druck nachgebende Wände oder Elemente vorgesehen sind, die reversibel einen unter Eisbildung entstehenden Druck im Arbeitsraum kompensieren können.

Aus der DE 101 50 518 ist es bekannt, ein Hamstoff-Dosierventil nach dem Abstellen der Brennkraftmaschine einem Gas auszusetzen.

### Vorteile der Erfindung

Bei der erfindungsgemäßen Dosierventilanordnung mit einem Dosierventil zum Dosieren einer Flüssigkeit, insbesondere zum Dosieren einer wässrigen Harnstoff-Lösung zur Nachbehandlung von Abgasen aus Verbrennungsmotoren, ist das Dosierventil (12) entgegengesetzt zur Förderrichtung (24) entleerbar. Eine unerwünschte Eisbildung, insbesondere ein Aufbau von überhöhten Eisdrücken in der Anordnung bei niedrigen Außentemperaturen, die das Dosierventil schädigen können, wird vermieden. Bevorzugt ist das Dosierventil stromauf einer Mischkammer angeordnet, in der die Flüssigkeit mit dem Gas zu einem Aerosol gemischt wird. Dabei ist eine Pumpe vorgesehen, die entgegen der Förderrichtung im Normalbetrieb das Dosierventil von der Flüssigkeit entleert, so dass die Flüssigkeit in einen Vorratstank zurückgeführt werden kann, was den Verbrauch der Flüssigkeit verringert und die Umwelt entlastet, da beim Entleeren keine Flüssigkeit nach außen freigesetzt wird. Besonders vorteilhaft ist das Dosierventil bezogen auf die Förderrichtung im Normalbetrieb stromauf einer Mischkammer angeordnet, in der aus der Flüssigkeit und einem Gas ein Aerosol gebildet wird, welches als Reduktionsmittel einem zu reduzierenden Stoff, beispielsweise Abgas, beigegeben wird. Vorzugsweise ist ein Gasdurchfluss in Förderrichtung gerichtet, während das Dosierventil durch die Pumpe entleert wird. Der Gasdurchfluss verhindert ein Ansaugen von Abgasen in die Dosierventilanordnung und führt stattdessen sicher das entsprechende Gas, bevorzugt Fahrzeugdruckluft, zu, während die wässrige Harnstofflösung aus der Anordnung entfernt und beispielsweise einem Vorratstank zugeführt wird.

Vorteilhafterweise ist die Pumpe als Förderpumpe mit umkehrbarer Förderrichtung ausgebildet, so dass eine in der Anordnung vorhandene Komponente zum Entleeren der Anordnung verwendet werden kann und kein zusätzlicher Bauraum benötigt wird.

Besonders vorteilhaft ist das Dosierventil pulsweitenmoduliert betätigbar. Vorzugsweise ist das Dosierventil stromlos geschlossen. Bei abgestelltem Fahrzeug ist die Anordnung ohne weiteren Aufwand stromauf des Dosierventils vor Kontamination und Verschmutzung geschützt.

Gemäß dem erfindungsgemäßen Verfahren zum Betreiben einer Dosierventilanordnung zum Dosieren einer Flüssigkeit insbesondere zum Dosieren einer wässrigen Harnstoff-Lösung zur Nachbehandlung von Abgasen aus Verbrennungsmotoren, wird vorgeschlagen, dass das Dosierventil zum Entleeren entgegen einer Förderrichtung im Normalbetrieb entleert wird. Das Verfahren ist zuverlässig und prozesssicher. Dabei wird die Flüssigkeit über eine Pumpe aus dem Dosierventil gesaugt.

Vorteilhafter Weise wird dazu die Drehrichtung einer Förderpumpe umgekehrt. Optional kann auch eine zweite Pumpe vorgesehen sein.

Vorzugsweise wird während des Entleerens ein Gasdurchfluss in Förderrichtung aufrechterhalten, so dass ein Ansaugen von Abgasen vermieden werden kann, wenn das Dosierventil entgegen der Förderrichtung entleert wird.

In einer weiteren günstigen Ausgestaltung wird beim Abstellen der Anordnung unter Gasdurchfluss ein Druck der Mischung aus Flüssigkeit und Gas abgebaut und die Mischkammer entleert. Vorzugsweise wird die Flüssigkeitssäule im Dosierventil mittels des Drucks des Gases in der Mischkammer in Richtung Pumpe bzw. eines eventuell vorhandenen Filters entgegen der Förderrichtung im Normalbetrieb zurückgeschoben.

Selbstverständlich können die Ausgestaltungen miteinander kombiniert werden, was eine bedarfsangepasste Betriebsweise der Dosierventilanordnung ermöglicht.

### Zeichnungen

Weitere Ausführungsformen, Aspekte und Vorteile der Erfindung ergeben sich auch unabhängig von ihrer Zusammenfassung in Ansprüchen, ohne Beschränkung der Allgemeinheit aus nachfolgend anhand einer Zeichnung dargestellten Ausführungsbeispielen der Erfindung.

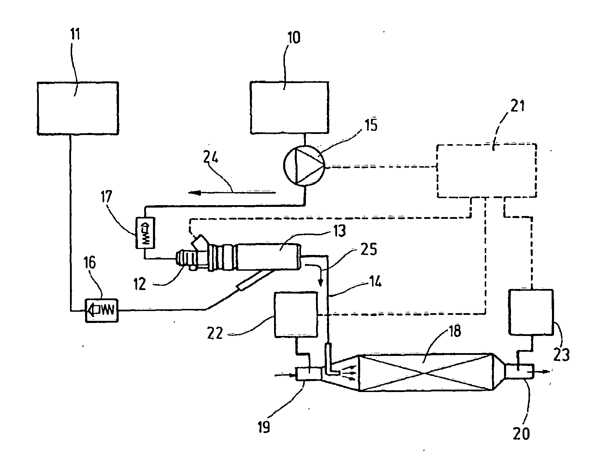

Im Folgenden zeigt die einzige Figur eine bevorzugte Dosierventilanordnung in einem Abgasstrang eines Kraftfahrzeugs.

### Beschreibung der Ausführungsbeispiele

Eine bevorzugte Dosierventilanordnung in einem Abgasstrang eines Kraftfahrzeugs ist in der Figur vereinfacht dargestellt. In einem Harnstofftank 10 ist eine wässrige Harnstofflösung als Reduktionsmittel zur Abgasnachbehandlung gespeichert, welche über eine Förderpumpe 15 und eine nicht näher bezeichnete Leitung und ein Rückschlagventil 17 in ein Dosierventil 12 einbringbar ist. Die Förderpumpe 15 fördert die wässrige Harnstofflösung in einer durch einen Pfeil gekennzeichneten Förderrichtung 24. In einem Drucklufttank 11 ist Druckluft gespeichert, die über eine nicht näher bezeichnete Leitung und ein Rückschlagventil 16 in eine an das Dosierventil 12 angeschlossene Mischkammer 13 einbringbar ist. Über eine Aerosolleitung 14 ist das in der Mischkammer 13 gebildete wässrige Harnstoff-Luft-Gemisch in einen Abgaseinlassbereich 19 einer Katalysatoreinrichtung 18 einbringbar. Eine Abgasströmungsrichtung am Abgaseinlassbereich 19 und am Abgasauslassbereich 20 ist jeweils durch Pfeile gekennzeichnet. Am Abgaseinlassbereich 19 und am Abgasauslassbereich 20 sind übliche Sensoren 22 bzw. 23 vorgesehen, beispielsweise Druck, Temperatursensoren, Lambdasonden und dergleichen, die mittels strichliert dargestellten, nicht näher bezeichneten Signalleitungen mit einem Steuergerät 21 verbunden sind. Das Steuergerät 21 steuert weiterhin abhängig von Betriebsparametern und/oder Betriebszuständen das Dosierventil 12 sowie die Förderpumpe 15 an, ebenso ist der Drucklufttank 11 ansteuerbar. Das Dosierventil 12 ist vorzugsweise pulsweitenmoduliert betreibbar.

Gemäß einer ersten Ausgestaltung der Erfindung ist beim Abstellen des Fahrzeugmotors die Mischkammer 13 unter Gasdurchfluss setzbar und das Dosierventil 12 entgegengesetzt zur Förderrichtung 24 entleerbar. Der Druckluftdurchfluss durch die Mischkammer 13 wird in der im Betrieb vorgegebenen Strömungsrichtung 25 aufrechterhalten, während die Drehrichtung der Förderpumpe 15 umgekehrt wird und die Harnstofflösung entgegen der im Betrieb üblichen Förderrichtung 24 in den Harnstofftank 10 zurückbefördert wird. Durch den Druckluftdurchfluss in der Mischkammer 13 wird ein Ansaugen von Abgas aus der Katalysatoreinrichtung 18 vermieden. Optional kann auch eine zweite Pumpe vorgesehen sein, um die Harnstofflösung aus der Mischkammer 13 und dem Dosierventil 12 herauszupumpen.

Gemäß einer weiteren Ausgestaltung der Erfindung wird das Dosierventil 12 gezielt mittels der Druckluft über die Mischkammer 13 ausgeblasen, so dass eine in Leitungen des Dosierventils 12 vorhandene Flüssigkeitssäule aus dem Dosierventil 12 in Richtung Förderpumpe 15 zurückgeschoben werden kann. Nach dem Abstellen des Fahrzeugmotors wird die Strömung der Druckluft in ihrer dem Betrieb entsprechenden Strömungsrichtung 25 aufrechterhalten. Der Druck der wässrigen Harnstofflösung im System wird abgebaut und die Mischkammer 13 entleert. Nach dem Entleeren der Mischkammer 13 wird das Dosierventil 12 geöffnet, so dass der Druck der Druckluft über die Mischkammer 13 die Flüssigkeitssäule im Dosierventil 12 entgegen der Förderrichtung 24 in den Leitungsbereich stromauf des Dosierventils 12 zurückschieben kann. Anschließend wird das Dosierventil 12 geschlossen und der Gasdurchfluss abgeschaltet. Zweckmäßigerweise ist in dieser Ausgestaltung das Rückschlagventil 17 überbrückbar (nicht dargestellt) oder es ist kein Rückschlagventil 17 vorgesehen.

## Patentansprüche

1. Dosierventilanordnung mit einem Dosierventil (12) zum Dosieren einer Flüssigkeit, insbesondere zum Dosieren einer wässrigen Harnstoff-Lösung zur Nachbehandlung von Abgasen aus Verbrennungsmotoren, wobei die Flüssigkeit in einer Förderrichtung (24) zum Dosierventil (12) förderbar ist und wobei eine Mischkammer (13) vorgesehen ist, in der die Flüssigkeit in einem Gasdurchfluss mit einem Gas mischbar ist, wobei das Dosierventil (12) entgegengesetzt zur Förderrichtung (24) entleerbar ist, **dadurch gekennzeichnet, dass** eine Pumpe (15) vorgesehen ist, die entgegen der Förderrichtung (24) das Dosierventil (12) von der Flüssigkeit entleert.

2. Dosierventilanordnung nach Anspruch 1, **dadurch gekennzeichnet, dass** die Pumpe (15) als Förderpumpe mit umkehrbarer Förderrichtung (24) ausgebildet ist.

3. Dosierventilanordnung nach einem der vorhergehenden Ansprüche, **dadurch gekennzeichnet, dass** das Dosierventil (12) pulsweitenmoduliert betätigbar ist.

4. Dosierventilanordnung nach einem der vorhergehenden Ansprüche, **dadurch gekennzeichnet, dass** beim Entleeren des Dosierventils (12) der Gasdurchfluss in Förderrichtung (24) gerichtet ist.

5. Verfahren zum Betreiben einer Dosierventilanordnung zum Dosieren einer Flüssigkeit, insbesondere zum Dosieren einer wässrigen Harnstoff-Lösung zur Nachbehandlung von Abgasen aus Verbrennungsmotoren, wobei die Flüssigkeit in einer Förderrichtung (24) zum Dosierventil (12) gefördert und die Flüssigkeit in einem Gasdurchfluss mit einem Gas in einer Mischkammer (13) gemischt wird, wobei zum Entleeren das Dosierventil (12) entgegen der Förderrichtung (24) entleert wird, **dadurch gekennzeichnet, dass** die Flüssigkeit über eine Pumpe (15) aus dem Dosierventil (12) gesaugt wird.

6. Verfahren nach Anspruch 5, **dadurch gekennzeichnet, dass** während des Entleerens der Gasdurchfluss in einer im Normalbetrieb herrschenden Strömungsrichtung (25) aufrechterhalten wird.

7. Verfahren nach einem der Ansprüche 5 bis 6, **dadurch gekennzeichnet, dass** beim Abstellen der Anordnung unter Gasdurchfluss ein Druck der Mischung aus Flüssigkeit und Gas abgebaut und die Mischkammer (13) von der Flüssigkeit entleert wird.

8. Verfahren nach Anspruch 7, **dadurch gekennzeichnet, dass** mit einem Gasdruck aus der Mischkammer (13) die Flüssigkeit entgegen der Förderrichtung (24) aus dem Dosierventil (12) geschoben wird.

## Claims

1. Dosing valve arrangement having a dosing valve (12) for dosing a liquid, in particular for dosing an aqueous urea solution for the post-treatment of exhaust gases from combustion engines, the liquid being deliverable in a delivery direction (24) to the dosing valve (12) and a mixing chamber (13) being provided, in which the liquid can be mixed with a gas in a gas through-flow, the dosing valve (12) being drainable oppositely to the delivery direction (24), **characterized in that** a pump (15) is provided which drains the liquid from the dosing valve (12) against the delivery direction (24).

2. Dosing valve arrangement according to Claim 1, **characterized in that** the pump (15) is designed as a delivery pump with a reversible delivery direction (24).

3. Dosing valve arrangement according to one of the preceding claims, **characterized in that** the dosing valve (12) can be actuated in a pulsewidth-modulated fashion.

4. Dosing valve arrangement according to one of the preceding claims, **characterized in that** the gas through-flow is directed in the delivery direction (24) when draining the dosing valve (12).

5. Method for operating a dosing valve arrangement for dosing a liquid, in particular for dosing an aqueous urea solution for the post-treatment of exhaust gases from combustion engines, the liquid being delivered in a delivery direction (24) to the dosing valve (12) and the liquid being mixed with a gas in a gas through-flow in a mixing chamber (13), the dosing valve (12) being drained against the delivery direction (24) for drainage, **characterized in that** the liquid is sucked from the dosing valve (12) via a pump (15).

6. Method according to Claim 5, **characterized in that** during the drainage, the gas through-flow is maintained in a flow direction (25) prevailing in normal operation.

7. Method according to one of Claims 5 to 6, **characterized in that** when turning off the arrangement under a gas through-flow, a pressure of the liquid and gas mixture is relaxed and the liquid is drained from the mixing chamber (13).

8. Method according to Claim 7, **characterized in that** the liquid is displaced out of the dosing valve (12) against the delivery direction (24) by a gas pressure from the mixing chamber (13).

## Revendications

1. Dispositif de soupape de dosage comportant une soupape de dosage (12) pour doser un liquide, notamment pour doser une solution aqueuse d'urée, pour le post-traitement des gaz d'échappement de moteurs à combustion interne, le liquide étant fourni dans le sens de transfert (24) à la soupape de dosage (12) et une chambre de mélange (13) servant à mélanger le liquide à du gaz dans un passage de gaz, la soupape de dosage (12) se vidant dans la direction opposée à la direction de transfert (24),
**caractérisé par**
une pompe (15) vidant le liquide de la soupape de dosage (12) dans la direction opposée à la direction de transfert (24).

2. Dispositif de soupape de dosage selon la revendication 1,
**caractérisé en ce que**
la pompe (15) est une pompe de refoulement à sens de refoulement réversible (24).

3. Dispositif de soupape de dosage selon l'une des revendications précédentes,
**caractérisé en ce que**
la soupape de dosage (12) est actionnée par modulation de largeur d'impulsion.

4. Dispositif de soupape de dosage selon l'une des revendications précédentes,
**caractérisé en ce que**
lors de l'évacuation de la soupape de dosage (12), le débit de gaz est dirigé dans la direction de transfert (24).

5. Procédé de commande d'un dispositif de soupape de dosage pour doser un liquide, notamment pour doser une solution aqueuse d'urée pour le post-traitement des gaz d'échappement de moteurs à combustion interne, selon lequel le liquide est transféré dans une direction de transfert (24) vers la soupape de dosage (12) et le liquide est mélangé à un gaz dans la chambre de mélange (13), dans un passage de gaz, et on vide la soupape de dosage (12) dans la direction opposée à la direction de transfert (24),
**caractérisé en ce que**
le liquide est aspiré de la soupape de dosage (12) par une pompe (15).

6. Procédé selon la revendication 5,
**caractérisé en ce que**
pendant l'évacuation, le passage de gaz est maintenu dans la direction d'écoulement (25) correspondant au mode de fonctionnement normal.

7. Procédé selon l'une des revendications 5 à 6,
**caractérisé en ce qu'**
à l'arrêt du dispositif, le passage de gaz réduit la pression du mélange formé du liquide et du gaz et vide le liquide de la chambre de mélange (13).

8. Procédé selon la revendication 7,
**caractérisé en ce qu'**
une pression de gaz de la chambre de mélange (13) pousse le liquide hors de la soupape de dosage (12) dans la direction opposée à la direction de transfert (24).
